# EUROPÄISCHE PATENTSCHRIFT

(11) **EP 1 544 040 B1**
(45) Veröffentlichungstag und Bekanntmachung des Hinweises auf die Patenterteilung: **31.05.2006**
(21) Anmeldenummer: 04027262.7
(22) Anmeldetag: 17.11.2004
(51) Int. Cl.: B60R 11/02

(54) **Armaturenbrett eines Kraftfahrzeugs mit einem Bildschirm**
Vehicle dashboard with a display
Planche de bord d'un véhicule avec un écran

(30) Priorität: 18.12.2003 DE 10359654
(43) Veröffentlichungstag der Anmeldung: 22.06.2005
(73) Patentinhaber: Bayerische Motoren Werke Aktiengesellschaft, 80809 München (DE)
(72) Erfinder: Schreff, Reinhold, 84103 Griessenbach (DE); Eigenmann, Martin, 84032 Landshut (DE)

(56) Entgegenhaltungen:
- EP-A- 1 308 348
- WO-A-97/46422
- DE-A1- 3 537 371
- DE-A1- 4 220 670
- US-A- 5 752 740

## Beschreibung

Die Erfindung betrifft ein Armaturenbrett eines Kraftfahrzeugs mit einem Bildschirm nach dem Oberbegriff des Patentanspruchs 1.

Aus der EP 1 308 348 A2 ist ein Bildschirm in einem Armaturenbrett eines Kraftfahrzeugs bekannt, der aus einer Nichtgebrauchsstellung in eine Gebrauchsstellung verschwenkbar ist. In der Nichtgebrauchsstellung ist der Bildschirm mit einer Klappe verdeckt.

Aufgabe der Erfindung ist es, ein Armaturenbrett mit einem eingelassenen Bildschirm zu schaffen, der aus einer Gebrauchsstellung in eine Nichtgebrauchsstellung verlagerbar ist, in der der Bildschirm auf elegante Weise verdeckt ist.

Diese Aufgabe wird durch ein Armaturenbrett eines Kraftfahrzeugs mit einem in einer Ausnehmung im Armaturenbrett eingelassenen Bildschirm mit den Merkmalen des Patentanspruchs 1 gelöst.

Erfindungsgemäß erstreckt sich dazu vom oberen und / oder unteren Randbereich des Bildschirms eine flexible Bespannung zumindest bis zum Randbereich der Ausnehmung in der Oberfläche des Armaturenbretts. Die flexible Bespannung verdeckt in der Nichtgebrauchsstellung günstigerweise den Blick auf den Bildschirm. Als flexible Bespannung eignet sich zum Beispiel Stoff, ein Gewirke, eine Folie aus Kunststoff, eine Kombination daraus, oder ähnliches. Die flexible Bespannung stellt also als Sichtteil den optischen Übergang zwischen der Oberfläche des Armaturenbretts und dem Bildschirm her. Aus optischen Gründen sollte die flexible Bespannung stets gespannt sein. Dies schränkt die möglichen Kinematiken zum Verlagern des Bildschirms ein. Wenn dagegen die flexible Bespannung zudem elastisch dehnbar ist, kann der Bildschirm deutlich freier verlagert werden, ohne dass die Bespannung einfällt, da die flexible Bespannung gedehnt unter Vorspannung eingebaut werden kann. Zu den Bildschirmen im Sinne dieser Erfindung zählen klassische Monitore, LCD-Displays und alle sonstigen Arten von flächigen Anzeigen.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einen Schnitt durch ein Armaturenbrett im Bereich eines eingelassenen Bildschirms, der sich in einer Gebrauchsstellung befindet und
- Fig. 2: einen Schnitt durch das in Figur 1 gezeigte Armaturenbrett mit dem Bildschirm in einer Nichtgebrauchsstellung.

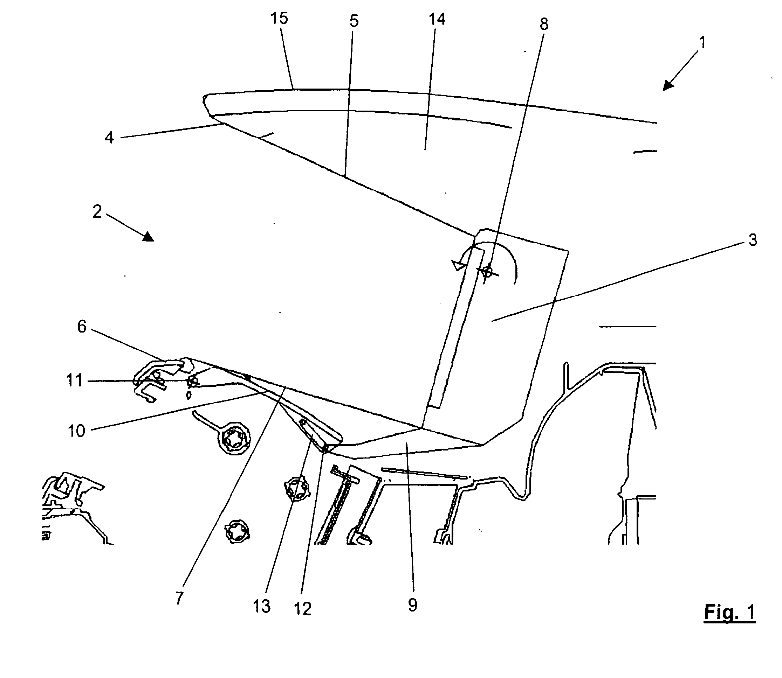

In der Fig. 1 ist ein Armaturenbrett 1 eines Personenkraftwagens dargestellt. Das Armaturenbrett 1 weist etwa in der Mitte eine große Ausnehmung 2 auf, in der in das Armaturenbrett 1 zurückversetzt ein Bildschirm 3 angeordnet ist. Dieser Bildschirm 3 dient beispielsweise zur Anzeige von Fahrzeugdaten, zur Anzeige von Landkarten eines Navigationssystems oder ähnlichem. Vom oberen Rand des Bildschirms 3 zum oberen Rand 4 der Ausnehmung 2 im Armaturenbrett 1 erstreckt sich eine obere flexible Bespannung 5 aus einem Stoff. Analog dazu erstreckt sich vom unteren Rand des Bildschirms 3 zum unteren Rand 6 der Ausnehmung 2 im Armaturenbrett 1 eine untere flexible Bespannung 7 aus Stoff. Der Bildschirm 3 ist um eine Achse 8 schwenkbar gelagert, die sich im oberen Bereich des Bildschirms 3 befindet. Am unteren Rand des Bildschirms 3 ist links und rechts jeweils ein sich nach vorne erstreckender Arm 9 angebracht. An den vorderen Enden dieser Arme 9 ist eine Klappe 10 mit ihrer hinteren Kante angelenkt. Mit ihrer vorderen Kante ist die Klappe 10 drehbar mit dem Armaturenbrett 1 über eine Anlenkung 11 im Bereich des unteren Randes 6 der Ausnehmung 2 verbunden. Die Klappe 10 und die Arme 9 befinden sich unterhalb der unteren flexiblen Bespannung 7 aus Stoff, so dass vom Fahrzeuginnenraum aus nur die untere flexible Bespannung 7, und nicht die Klappe 10 und die Arme 9 sichtbar sind.

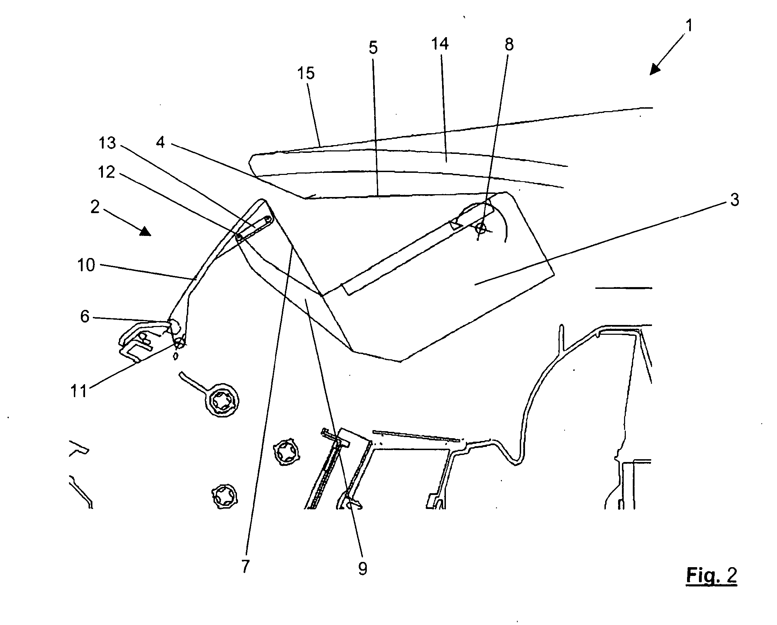

Wenn nun der Bildschirm 3 aus der in Fig. 1 gezeigten Gebrauchsstellung in die in Fig. 2 gezeigte Nichtgebrauchsstellung verlagert werden soll, muss der Bildschirm 3 um seine im oberen Bereich befindliche Achse 8 nach vorne in Uhrzeigersinn verschwenkt werden. Dabei werden auch die beiden unten am Bildschirm 3 angebundenen Arme 9 nach vorne oben verschwenkt. Die an den Armen 9 mit ihrer Hinterkante angelenkte Klappe 10 wird dadurch um ihre armaturenbrettseitige Anlenkung 11 nach oben verschwenkt. Aus kinematischen Gründen verläuft die Achse 12 zur Anlenkung der Klappe 10 an die beiden Arme 9 in einem Langloch 13 der Klappe 10. In der nach oben verschwenkten Stellung der Klappe 10 verdeckt diese große Teile des freien Blicks auf den Bildschirm 3. Die oberhalb der Klappe 10 angeordnete untere flexible Bespannung 7 aus Stoff überspannt dabei auf optisch ansprechende Weise die Klappe 10.

Darüber hinaus ist der Bereich 14 des Armaturenbretts 1, der sich oberhalb der Ausnehmung 2 befindet, verlagerbar. Wenn der Bildschirm 3 sich in der in Fig. 1 gezeigten Gebrauchsstellung befindet, ist dieser obere Bereich 14 in einer angehobenen Stellung. Dadurch ist sichergestellt, dass der Blick auf den Bildschirm 3 nicht durch den oberen Bereich 14 teilweise verdeckt ist. Wenn sich dagegen der Bildschirm 3 in der in Fig. 2 gezeigten Nichtgebrauchsstellung befindet, ist der obere Bereich 14 des Armaturenbretts 1 in einer abgesenkten Grundstellung. Dann bildet der obere Bereich 14 mit den angrenzenden seitlichen Abschnitten des Armaturenbretts 1 eine ebene glatte Oberfläche, ohne eine sichtbare Erhebung im Bereich des Bildschirms 3. Die Verlagerung des oberen Bereichs 14 des Armaturenbretts 1 ist mechanisch mit der Verlagerung des Bildschirms 3 gekoppelt. Wenn also der Bildschirm 3 aus der Nichtgebrauchsstellung in die Gebrauchsstellung verschwenkt wird, verlagert sich automatisch zugleich der obere Bereich 14 aus der Grundstellung in die angehobene Stellung und umgekehrt.

Der obere Bereich 14 und die daran angrenzenden Bereiche des Armaturenbretts 1 sind auf der Oberseite mit einer flexiblen Bespannung 15 überzogen. Dadurch sind alle Höhensprünge, die beispielsweise zwischen dem oberen Bereich 14 und den seitlich daran angrenzenden Bereichen in der angehobenen Stellung vorhanden sind, optisch durch die flexible Bespannung 15 verdeckt. Die flexible Bespannung überspannt einen solchen Höhensprung, sodass eine optisch glatte, dynamisch leicht ansteigenden Fläche entsteht.

So kann ein Bildschirm 3 in einem Armaturenbrett 1 angeordnet werden, der gut sichtbar ist, wann immer er benötigt wird. Wenn er dagegen nicht benötigt wird, ist er durch die Klappe 10 und durch den abgesenkten oberen Bereich 14 optisch sehr ansprechend verdeckt. Die Klappe 10 ist dabei durch die untere flexible Bespannung 7 optisch verdeckt. Das Armaturenbrett 1 weist dann keine störende unnötige Erhebung für den nicht benötigten Bildschirm 3 auf. Durch die flexiblen Bespannungen 5, 7 und 15 aus Stoff lassen sich auf preiswerte Weise optisch sehr ansprechende Oberflächen darstellen, die zudem durch darunter angeordnete Mechaniken in ihrer Oberflächenform gut veränderbar sind.

## Patentansprüche

1. Armaturenbrett (1) eines Kraftfahrzeugs mit einem in einer Ausnehmung (2) eingelassenen Bildschirm (3), der aus einer Nichtgebrauchsstellung in eine Gebrauchsstellung im Armaturenbrett (1) verlagerbar ist, **dadurch gekennzeichnet, dass** sich vom oberen und / oder unteren Randbereich des Bildschirms (3) eine flexible Bespannung (5, 7) zumindest bis zum Randbereich (4, 6) der Ausnehmung (2) in der Oberfläche des Armaturenbretts (1) erstreckt.

2. Armaturenbrett (1) nach Anspruch 1, **dadurch gekennzeichnet, dass** der Schacht zwischen dem Randbereich (4, 6) der Ausnehmung (2) und dem Bildschirm (3) in der Gebrauchsstellung oben durch eine obere flexible Bespannung (5) und unten durch eine untere flexible Bespannung (7) gebildet wird.

3. Armaturenbrett (1) nach Anspruch 1 oder 2, **dadurch gekennzeichnet, dass** in der Nichtgebrauchsstellung des Bildschirms (3) die zumindest eine flexible Bespannung (7) den Blick auf den Bildschirm (3) verdeckt.

4. Armaturenbrett (1) nach einem der vorhergehenden Ansprüche, **dadurch gekennzeichnet, dass** an dem oberen und / oder unteren Randbereich des Bildschirms (3) von außen gesehen hinter der flexiblen Bespannung (7) ein flächige Klappe (10) angelenkt ist, die mit einem Randabschnitt drehbar mit dem Armaturenbrett (1) im Bereich des Rands (6) der Ausnehmung (2) verbunden ist.

5. Armaturenbrett (1) nach Anspruch 4, **dadurch gekennzeichnet, dass** die Klappe (10) nicht direkt am oberen bzw. unteren Randbereich des Bildschirms (3) angelenkt ist, sondern an diesem Randbereich zumindest ein Arm (9) fest angebracht ist, an dem die Klappe (10) angelenkt ist.

6. Armaturenbrett (1) nach einem der vorhergehenden Ansprüche, **dadurch gekennzeichnet, dass** zumindest der Bereich (14) des Armaturenbretts (1), der sich oberhalb der Ausnehmung (2) befindet, verlagerbar ist.

7. Armaturenbrett (1) nach Anspruch 6, **dadurch gekennzeichnet, dass** der verlagerbare Bereich (14) aus der Grundstellung nach oben in eine angehobene Stellung verlagerbar ist.

8. Armaturenbrett (1) nach Anspruch 6 oder 7, **dadurch gekennzeichnet, dass** der verlagerbare Bereich (14) mit der Mechanik zum Verlagern des Bildschirms (3) gekoppelt ist.

9. Armaturenbrett (1) nach einem der Ansprüche 6 bis 8, **dadurch gekennzeichnet, dass** der verlagerbare Bereich (14) und die daran angrenzenden Bereiche des Armaturenbretts (1) mit einer flexiblen Bespannung (15) überspannt sind.

## Claims

1. A dashboard (1) of a motor vehicle with a display (3) inserted into a recess (2) and movable from an inoperative position into an operative position on the dashboard (1), **characterised in that** a flexible covering (5, 7) extends from the top and/or bottom edge region of the display (3) at least as far as the edge region (4, 6) of the recess (2) in the surface of the dashboard (1).

2. A dashboard (1) according to claim 1, **characterised in that** the shaft between the display (3) and the edge region (4, 6) of the recess (2), when in the operative position, is formed by a flexible top covering (5) above and a flexible bottom covering (7) below.

3. A dashboard (1) according to claim 1 or 2, **characterised in that** the at least one flexible covering (7) conceals the display (3) from view when the display (3) is in the inoperative position.

4. A dashboard (1) according to any of the preceding claims, **characterised in that** a thin flap (10) is pivoted to the top and/or bottom edge region of the display (3), behind the flexible covering (7) as seen from the outside, and an edge portion of the flap is rotatably connected to the dashboard (1) at the edge (6) of the recess (2).

5. A dashboard (1) according to claim 4, **characterised in that** the flap (10) is not directly pivoted to the top or bottom edge region of the display (3) but the flap (10) is pivoted to at least one arm (9) permanently mounted on the said edge region.

6. A dashboard (1) according to any of the preceding claims, **characterised in that** at least that region (14) of the dashboard (1) which is above the recess (2) is movable.

7. A dashboard (1) according to claim 6, **characterised in that** the movable region (14) is movable from the normal position upwards to a raised position.

8. A dashboard (1) according to claim 6 or 7, **characterised in that** the movable region (14) is connected to the mechanism for moving the display (3).

9. A dashboard (1) according to any of claims 6 to 8, **characterised in that** the movable region (14) and the adjoining regions of the dashboard (1) are covered by a flexible covering (15).

## Revendications

1. Tableau de bord (1) d'un véhicule avec un écran (3) emboîté dans un évidement (2) et pouvant être déplacé d'une position de non utilisation à une position d'utilisation dans le tableau de bord (1),
**caractérisé en ce qu'**
un revêtement souple (5, 7) s'étend de la zone de bord supérieure et/ou inférieure de l'écran (3) au moins jusqu'à la zone de bord (4, 6) de l'évidement (2) à la surface du tableau de bord (1).

2. Tableau de bord (1) selon la revendication 1,
**caractérisé en ce que**
le compartiment entre la zone de bord (4, 6) de l'évidement (2) et l'écran (3) est formé en position d'utilisation par un revêtement souple supérieur (5) et par un revêtement souple inférieur (7).

3. Tableau de bord (1) selon la revendication 1 ou 2,
**caractérisé en ce que**
le revêtement (7) souple cache l'écran (3) en position de non utilisation.

4. Tableau de bord (1) selon l'une quelconque des revendications précédentes,
**caractérisé en ce qu'**
un couvercle rabattable plan (10) relié en rotation à une section du tableau de bord (1) dans la zone du bord (6) de l'évidement (2) est articulé sur la zone de bord supérieure et/ou inférieure de l'écran (3) derrière le revêtement souple (7) si l'on regarde de l'extérieur.

5. Tableau de bord (1) selon la revendication 4,
**caractérisé en ce que**
le couvercle rabattable (10) n'est pas articulé directement sur la zone de bord supérieure et/ou inférieure de l'écran (3), mais par au moins un bras (9) appliqué fixement à cette zone de bord.

6. Tableau de bord (1) selon l'une quelconque des revendications précédentes,
**caractérisé en ce que**
la zone (14) du tableau de bord (1) qui se trouve au-dessus de l'évidement (2) peut être déplacée.

7. Tableau de bord (1) selon la revendication 6,
**caractérisé en ce que**
la zone mobile (14) peut être déplacée de la position initiale vers le haut à une position soulevée.

8. Tableau de bord (1) selon la revendication 6 ou 7,
**caractérisé en ce que**
la zone mobile (14) est couplée au mécanisme de déplacement de l'écran (3).

9. Tableau de bord (1) selon l'une quelconque des revendications 6 à 8,
**caractérisé en ce que**
la zone mobile (14) et les zones adjacentes du tableau de bord (1) sont recouvertes d'un revêtement souple (15).
